# EUROPEAN PATENT APPLICATION

(11) **EP 4 637 165 A1**
(43) Date of publication of application: **22.10.2025**
(21) Application number: 24315180.0
(22) Date of filing: 16.04.2024
(51) Int. Cl.: H04N 21/443, H04N 21/854

(54) **METHOD AND DEVICE FOR ENERGY REDUCTION OF VISUAL CONTENT BASED ON PIXEL-WISE ATTENUATION**

(71) Applicant: InterDigital CE Patent Holdings, SAS, 75017 Paris (FR)
(72) Inventor: Aumont, Franck, 35770 VERN SUR SEICHE (FR); Le Meur, Olivier, 35160 TALENSAC (FR); Demarty, Claire-Helene, 35520 MONTREUIL LE GAST (FR); Blonde, Laurent, 35235 THORIGNE-FOUILLARD (FR); Reinhard, Erik, 35630 HEDE-BAZOUGES (FR)

(57) **Abstract**

A video receiver device sends, to a video transmitter, information indicative of a request for video content adapted for energy-reduced rendering. In response to the request that can include energy-reduction parameters, the video transmitter can generate a pixel-wise attenuation map to be applied to the video content and metadata indicative of at least one of an achieved energy reduction rate, and a value of video quality reduction for a corresponding selected metric. The video receiver receives attenuated video content and metadata, and renders the video content.

## Description

### TECHNICAL FIELD

The disclosure is in the field of video compression, and at least one embodiment relates more specifically to encoding and decoding a video comprising attenuation map information and corresponding parameters, the pixel-wise application of the attenuation map allowing a reduction of the energy consumption when using the video, for example when rendering it on a display.

### BACKGROUND ART

Reducing energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Indeed, displays are the most important source of energy consumption, for consumer electronic devices, either battery-powered (e.g., smartphones, tablets, head-mounted displays, car display screens) or not (e.g., television sets, advertisement display panels).

Different display technologies have been developed in the recent years. Although modem displays consume energy in a more controllable and efficient manner than older displays, they remain the most important source of energy consumption in a video chain.

As far as backlight displays are concerned, their energy consumption is largely determined by the intensity of the backlight.

Organic Light Emitting Diode (OLED) is one example of display technology that is finding increasingly widespread use because of numerous advantages compared to former technologies such as Thin-Film Transistor Liquid Crystal Displays (TFT-LCDs). Rather than using a uniform backlight, OLED displays, as well as mini LEDS, are composed of individual directly emissive image pixels. OLEDs power consumption is therefore highly correlated to the image content and the power consumption for a given input image can be estimated by considering the values of the displayed image pixels. Although OLED displays consume energy in a more controllable and efficient manner, they are still the most important source of energy consumption in the video chain.

ISO/IEC 23001-11 Energy-Efficient Media Consumption (Green Metadata) specifies metadata, so-called Green Metadata, that enable the reduction of energy usage during media consumption, specifically at the display side. The metadata for display adaptation as defined in this specification (section "Display power reduction using display adaptation") are designed for a specific display and are particularly well tailored to transmissive display technologies embedding backlight illumination such as LCD displays. These metadata are designed to attain display energy reductions by using display adaptation techniques. They are composed of metrics made of RGB-component statistics and quality indicators of the video content, and can be used to perform RGB picture components rescaling to set the best compromise between backlight/voltage reduction and picture quality. They metadata differ depending on whether the use case is point-to-point transmission or point-to-multipoint transmission. Since the publication of ISO/IEC 23001-11, new emissive technologies have been introduced with the spread of emissive OLED displays, which allow a pixel-wise and more efficient control of their energy consumption, and consequently, a reduction of their energy consumption.

If the metadata already defined in the standard convey information for reduction of the energy consumed by displays, they also have the following drawbacks. First, they are tailored for backlit display technologies and therefore convey global information on statistics derived from the input content, and do not provide any information related to a pixel-wise attenuation map. Second, such global information is far from optimal when applied to more controllable directly emissive displays, for which it would be possible to apply energy reduction at the pixel level, allowing more precise control both on the energy reduction and quality of experience.

### SUMMARY

In a first aspect, the present principles are directed to a method in which a video receiver device sends, to a video transmitter, information indicative of a request for video content adapted for energy-reduced rendering, receives, from the video transmitter, the video content, and renders the video content.

In a second aspect, the present principles are directed to a video receiver device comprising a transmitter configured to send, to a video transmitter, information indicative of a request for video content adapted for energy-reduced rendering, a receiver configured to receive, from the video transmitter, the video content, and a processor configured to render the video content.

In a third aspect, the present principles are directed to a method in which a video transmitter, in response to a request, from a video receiver, for video content adapted for energy-reduced rendering, the request comprising energy-reduction parameters, generates a pixel-wise attenuation map to be applied to the video content, and generates metadata indicative of at least one of an achieved energy reduction rate, and a value of video quality reduction for a corresponding selected metric.

In a fourth aspect, the present principles are directed to a video transmitter comprising a processor configured to, in response to a request, from a video receiver, for video content adapted for energy-reduced rendering, the request comprising energy-reduction parameters, generate a pixel-wise attenuation map to be applied to the video content, and generate metadata indicative of at least one of an achieved energy reduction rate, and a value of video quality reduction for a corresponding selected metric.

### BRIEF SUMMARY OF THE DRAWINGS

The present disclosure may be better understood by consideration of the detailed description below in conjunction with the accompanying figures in which:
Figure 1 illustrates a block diagram of a video encoder according to an embodiment.
Figure 2 illustrates a block diagram of a video decoder according to an embodiment.
Figure 3 illustrates a block diagram of an example of a system in which various aspects and embodiments are implemented.
Figure 4 illustrates a block diagram of an example of a system in which various aspects and embodiments are implemented.
Figure 5 illustrates a sequence diagram of an example of an energy reduction method according to at least one embodiment.
Figure 6 illustrates a flow chart for a method of generation of green metadata at the transmitter according to an embodiment of the present principles.
Figure 7 illustrates a flow chart for a method of generation of green metadata at the transmitter according to a further embodiment of the present principles.
Figure 8 is a flow chart illustrating a method for decoding an attenuated video according to an embodiment of the present principles.

It should be understood that the drawings are for purposes of illustrating examples of various aspects, features and embodiments in accordance with the present disclosure and are not necessarily the only possible configurations. Throughout the various figures, like reference designators refer to the same or similar features.

### DETAILED DESCRIPTION

The present aspects, although describing principles related to particular drafts of VVC (Versatile Video Coding) or to HEVC (High Efficiency Video Coding) specifications, are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

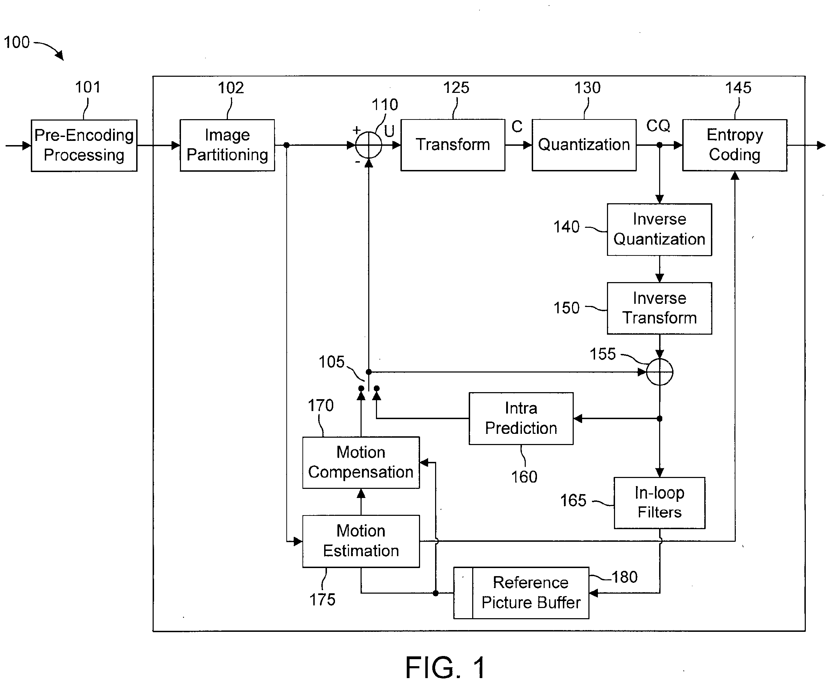

**Figure 1** illustrates a block diagram of a video encoder according to an embodiment. Variations of this encoder 100 are contemplated, but the encoder 100 is described below for purposes of clarity without describing all expected variations. Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (180).

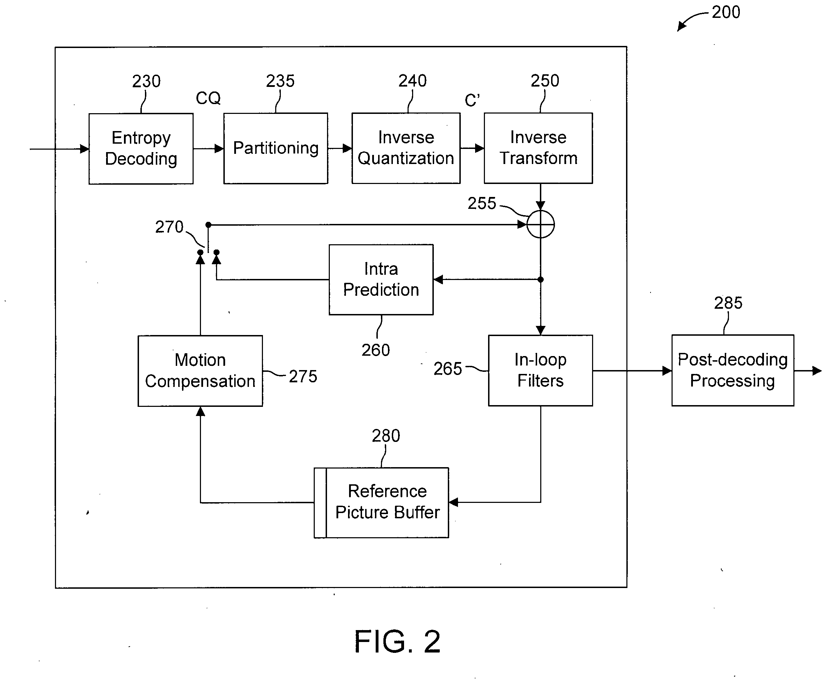

**Figure 2** illustrates a block diagram of a video decoder according to an embodiment. In the decoder 200, a bitstream is decoded by the decoder elements as described below. Video decoder 200 generally performs a decoding pass reciprocal to the encoding pass. The encoder 100 also generally performs video decoding as part of encoding video data. In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

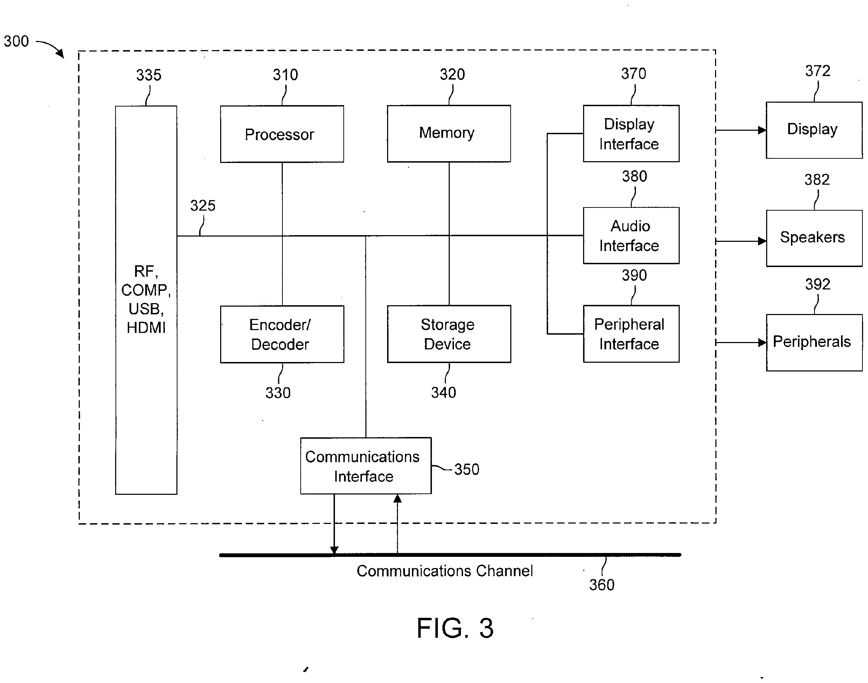

**Figure 3** illustrates a block diagram of an example of a system in which various aspects and embodiments are implemented. System 300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 300, singly or in combination, can be embodied in a single integrated circuit (IC), multiple ICs, and/or discrete components. For example, in at least one embodiment, the processing and encoder/decoder elements of system 300 are distributed across multiple ICs and/or discrete components. In various embodiments, the system 300 is communicatively coupled to one or more other systems, or other electronic devices, via, for example, a communications bus or through dedicated input and/or output ports. In various embodiments, the system 300 is configured to implement one or more of the aspects described in this document.

The system 300 includes at least one processor 310 configured to execute instructions loaded therein for implementing, for example, the various aspects described in this document. The processor 310 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 310 can include embedded memory, input output interface, and various other circuitries as known in the art. The system 300 includes at least one memory 320 (e.g., a volatile memory device, and/or a non-volatile memory device). System 300 includes a storage device 340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 340 can include an internal storage device, an attached storage device (including detachable and non-detachable storage devices), and/or a network accessible storage device, as non-limiting examples.

System 300 includes an encoder/decoder module 330 configured, for example, to process data to provide an encoded video or decoded video, and the encoder/decoder module 330 can include its own processor and memory. The encoder/decoder module 330 represents module(s) that can be included in a device to perform the encoding and/or decoding functions. As is known, a device can include one or both of the encoding and decoding modules. Additionally, encoder/decoder module 330 can be implemented as a separate element of system 300 or can be incorporated within processor 310 as a combination of hardware and software as known to those skilled in the art.

Program code to be loaded onto processor 310 or encoder/decoder 330 to perform the various aspects described in this document can be stored in storage device 340 and subsequently loaded onto memory 320 for execution by processor 310. In accordance with various embodiments, one or more of processor 310, memory 320, storage device 340, and encoder/decoder module 330 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 310 and/or the encoder/decoder module 330 is used to store instructions and to provide working memory for processing that is needed during encoding or decoding. In other embodiments, however, a memory external to the processing device (for example, the processing device can be either the processor 310 or the encoder/decoder module 330) is used for one or more of these functions. The external memory can be the memory 320 and/or the storage device 340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), DASH (Dynamic Adaptive Streaming over HTTP, ISO/IEC 23009-1 and ISO/IEC 23009-3), or VVC (Versatile Video Coding, a new standard being developed by JVET, the Joint Video Experts Team).

The input to the elements of system 300 can be provided through various input devices as indicated in block 335. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 3, include composite video.

In various embodiments, the input devices of block 335 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 300 to other electronic devices across USB and/or HDMI connections. It is to be understood that various aspects of input processing, for example, Reed-Solomon error correction, can be implemented, for example, within a separate input processing IC or within processor 310 as necessary. Similarly, aspects of USB or HDMI interface processing can be implemented within separate interface ICs or within processor 310 as necessary. The demodulated, error corrected, and demultiplexed stream is provided to various processing elements, including, for example, processor 310, and encoder/decoder 330 operating in combination with the memory and storage elements to process the datastream as necessary for presentation on an output device.

Various elements of system 300 can be provided within an integrated housing. Within the integrated housing, the various elements can be interconnected and transmit data therebetween using suitable connection arrangement 325, for example, an internal bus as known in the art, including the Inter-IC (I2C) bus, wiring, and printed circuit boards.

The system 300 includes communication interface 350 that enables communication with other devices via communication channel 360. The communication interface 350 can include, but is not limited to, a transceiver configured to transmit and to receive data over communication channel 360. The communication interface 350 can include, but is not limited to, a modem or network card and the communication channel 360 can be implemented, for example, within a wired and/or a wireless medium.

Data is streamed, or otherwise provided, to the system 300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 360 and the communications interface 350 which are adapted for Wi-Fi communications. The communications channel 360 of these embodiments is typically connected to an access point or router that provides access to external networks including the Internet for allowing streaming applications and other over-the-top communications. Other embodiments provide streamed data to the system 300 using a set-top box that delivers the data over the HDMI connection of the input block 335. Still other embodiments provide streamed data to the system 300 using the RF connection of the input block 335. As indicated above, various embodiments provide data in a non-streaming manner. Additionally, various embodiments use wireless networks other than Wi-Fi, for example a cellular network or a Bluetooth network.

The system 300 can provide an output signal to various output devices, including a display 372, speakers 382, and other peripheral devices 392. The display 372 of various embodiments includes one or more of, for example, a touchscreen display, an organic light-emitting diode (OLED) display, a curved display, and/or a foldable display. The display 372 can be for a television, a tablet, a laptop, a cell phone (mobile phone), or other devices. The display 372 can also be integrated with other components (for example, as in a smart phone), or separate (for example, an external monitor for a laptop). The other peripheral devices 392 include, in various examples of embodiments, one or more of a stand-alone digital video disc (or digital versatile disc) (DVR, for both terms), a disk player, a stereo system, and/or a lighting system. Various embodiments use one or more peripheral devices 392 that provide a function based on the output of the system 300. For example, a disk player performs the function of playing the output of the system 300.

In various embodiments, control signals are communicated between the system 300 and the display 372, speakers 382, or other peripheral devices 392 using signaling such as AV.Link, Consumer Electronics Control' (CEC), or other communications protocols that enable device-to-device control with or without user intervention. The output devices can be communicatively coupled to system 300 via dedicated connections through respective interfaces 370, 380, and 390. Alternatively, the output devices can be connected to system 300 using the communications channel 360 via the communications interface 350. The display 372 and speakers 382 can be integrated in a single unit with the other components of system 300 in an electronic device such as, for example, a television. In various embodiments, the display interface 370 includes a display driver, such as, for example, a timing controller (T Con) chip.

The display 372 and speaker 382 can alternatively be separate from one or more of the other components, for example, if the RF portion of input 335 is part of a separate set-top box. In various embodiments in which the display 372 and speakers 382 are external components, the output signal can be provided via dedicated output connections, including, for example, HDMI ports, USB ports, or COMP outputs.

The embodiments can be carried out by computer software implemented by the processor 310 or by hardware, or by a combination of hardware and software. As a non-limiting example, the embodiments can be implemented by one or more integrated circuits. The memory 320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 310 can be of any type appropriate to the technical environment, and can encompass one or more of microprocessors, general purpose computers, special purpose computers, and processors based on a multi-core architecture, as non-limiting examples.

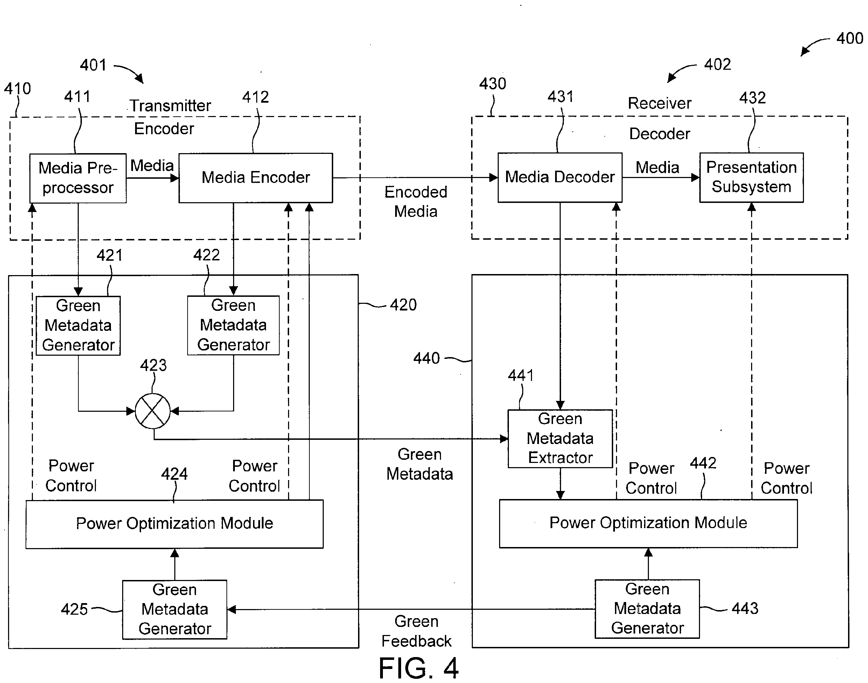

**Figure 4** illustrates a block diagram of an example of a system 400 in which various aspects and embodiments are implemented. For ease of understanding and comparison, the block diagram is heavily based on Figure 1 - Functional architecture of ISO/IEC 23001-11.

The system 400 includes a transmitter side 401 and a receiver side 402.

The transmitter side 401 includes an encoder 410 with a media pre-processor 411 that provides media to a media encoder 412 of the encoder 401, which can output encoded media to the receiver side 402.

The transmitter side 401 further includes a green processing module 420 that includes a first green metadata generator 421 and a second green metadata generator 422, respectively configured to generate metadata based on information from pre-processing and encoding. The generated metadata can be combined, in combiner 423, and output to the receiver side 402.

The transmitter green processing module 420 further includes a power optimization module 424 that can provide instructions, for example based on green metadata provided by green metadata extractor 425 based on green feedback information received from the receiver side 402, to the pre-processor 411 and the encoder 412 on how to process to media video to comply (possibly not exactly) with the green feedback information, i.e. its energy reduction request.

The receiver side 402 includes a decoder 430 with a media decoder 431 configured to decode the received encoded media and to provide the resulting media to a presentation subsystem 432 for rendering.

The receiver side 402 further includes a receiver green processing module 440 with a green metadata extractor 441, a power optimization module 442 and a green metadata generator 443. The green metadata extractor 441, possibly using information from the media decoder 431, extracts green metadata received from the transmitter side 401 and provides the extracted metadata to the power optimization module 442. The green metadata generator 443 is configured to generate green metadata, for example based on user input, and to provide the generated green metadata to the power optimization module 442 and to the green metadata extractor 425 at the transmitter side 401. Based on the green metadata received from the green metadata extractor 441 and the green metadata generator 443, the power optimization module 442 can generate and send power control signals (e.g. messages) to the media decoder 431 and the presentation subsystem 432.

As already mentioned, ISO/IEC 23001-11 specifies metadata aiming at signaling information for display adaptation. The metadata comprise RGB-component statistics and quality indicators of the video content. The statistics are used to set display controls in the presentation subsystem to attain desired quality levels and corresponding display power reductions. A signaling mechanism between the receiver and the transmitter is defined and the metadata sent from the transmitter to the receiver include:
- **num_quality_levels** indicating the number of quality levels that are enabled by the metadata, excluding the NQLOP (No-Quality-Loss Operating Point),
- **lower_bound** and **upper_bound** indicating information on how contrast enhancement is to be performed,
- **rgb_component_for_infinite_psnr** indicating the largest RGB component in the reconstructed frames,
- **max_rgb_component[ i ]** indicating the i^{th} quality level, the maximum RGB component that will be retained in the frames, where 1 <= i <= num_quality_levels, and
- **scaled_psnr_rgb[ i ]** indicating the PSNR of ScaledFrames[ i ] relative to the reconstructed frames.

While the metadata convey information for reduction of the energy consumed by displays, they do not provide metadata indicating how to use a pixel-wise attenuation map. The information is global and inefficient because it is limited when applied to more controllable emissive displays for which it is possible to apply energy reduction at the pixel level. Enabling this could allow a more precise control both on the energy reduction and quality of experience.

Embodiments described hereafter have been designed with the foregoing in mind and propose to solve these issues by extending the capability of the receiver to send a request to the transmitter to leverage a pixel-wise attenuation map (also called dimming map) dedicated to the reduction of the energy consumption of its display in point-to-point video communication. Syntax and signaling of a new message are provided and specified in a proposed amendment to the ISO/IEC 23001-11 document. Generally speaking, the transmitter side receives the request, generates the attenuation map and the related information of the resulting video and applies the map to the video content before inserting it in the bitstream with the green metadata SEI message. This SEI message is decoded at the decoder and passed on to the power optimization block.

The receiver's request can be sent at any time, for example initiated by the receiver to preserve the lifetime of its battery or to be aligned with its energy consumption strategy. The receiver can also cancel the request at any time and return to a state without display power reduction. In the latter case, the transmitter stops producing the attenuation map and applying it to the video content and the related information is no more transmitted in the green metadata SEI. The received video can be the original one, unmodified by an attenuation map, and the receiver does not expect any display power reduction.

The present principles extend the signaling between the receiver and the transmitter to use Display Adaptation for reducing the power consumption of the receiver display while rendering a video.

Table 1 illustrates the syntax of the existing ISO/IEC 23001-11 signaling from the receiver for backlight display power reduction. As already mentioned, the existing syntax does not allow to request pixel-wise attenuation of the video content, but only enables transmission of the illustrated global information that is inefficient and limited when applied to an emissive display.

**Table 1 - syntax from receiver for backlight display power reduction**

| | **Descriptor** |
|---|---|
| **constant_backlight_voltage_time_interval** | u(16) |
| **max_variation** | u(8) |

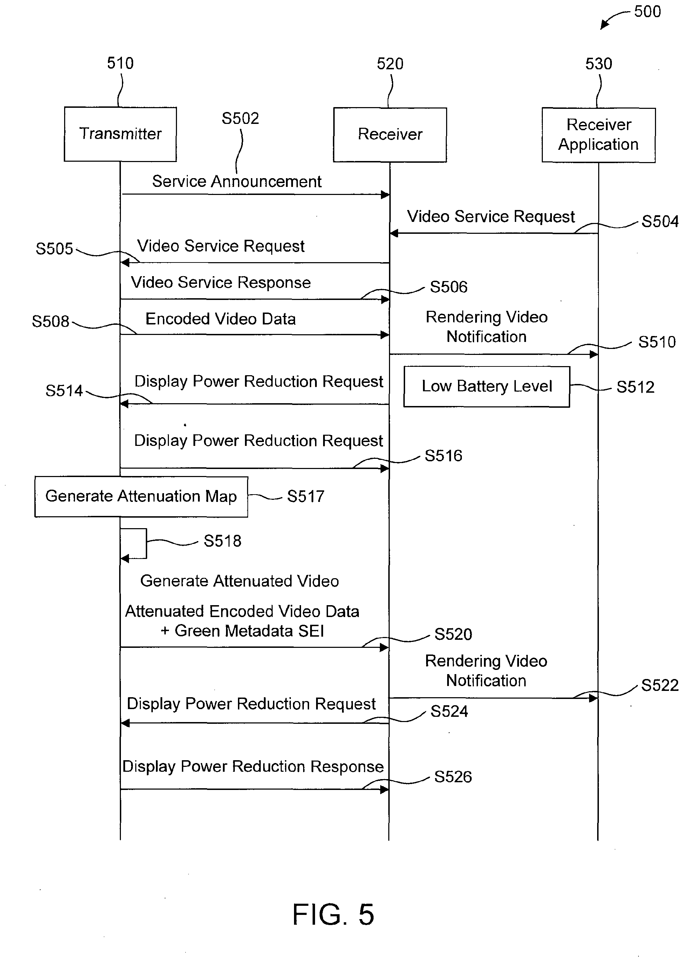

**Figure 5** illustrates a sequence diagram 500 of an example of an energy reduction method according to at least one embodiment. The diagram illustrates a transmitter 510 (e.g. transmitter 401 in Figure 4), a receiver 520 (e.g. receiver 402 in Figure 4) and a receiver application 530 executing on the receiver 520.

In step S502, the transmitter 510 transmits (e.g. broadcasts) a service announcement indicating that a given service, service#1, is a green profile service; in other words, service#1 can be made to comply with energy reduction requirements.

In step S504, the receiver 520 receives a request for video service, in this example service#1. The request is result of a user selection of a green profile service received through the receiver application 530.

In step S505, the receiver 520 sends a message indicative of the request for video service to the transmitter 510.

In step S506, the transmitter 510 sends a response indicating that display power reduction is supported for the requested video service. (In the example, it is assumed that the receiver is authorized to receive the video service.)

In step S508, having received from a content provider video data corresponding to the video service and having encoded the video data, as described with reference to Figure 4, the transmitter 510 sends encoded video data to the receiver 520.

In step S510, the receiver 520 provides a notification to the receiver application 530 indicating at least one of that the video is or will be rendered.

In step S512, the receiver 520 determines that its battery level is low.

In step S514, in response to the determination of low battery level, the receiver 520 transmits to the transmitter 510 a request for display power reduction. It is noted that the request can be sent for other reasons, for example upon determination that no one is actively watching the video. The request can include an energy reduction value, for example an energy reduction rate, video quality reduction values or a combination thereof.

In step S516, the transmitter 510 sends a response to the receiver 520 to acknowledge the reception of the request for display power reduction and, for example, to indicate the expected value of the energy reduction and quality metric reduction rates when the received video data are rendered on the display of the receiver.

In step S517, the transmitter 510 generates an attenuation map that, in step S518, is applied to the video content before the attenuated video content is inserted into the bitstream with the Green Metadata SEI and, in step S520 transmitted to the receiver 520.

In step S521, the receiver 520 decodes and renders the attenuated video on the display and parses the Green Metadata SEI message.

In step S522, the receiver notifies the user of the video rendering through the application 530.

Upon determination to stop the energy consumption reduction, for example after having had its battery charged or in case of active viewing of the video, in step S524, the receiver 520 sends a request to stop display power reduction. The request can for example include a cancel flag or similar information.

In step S526, the transmitter 510 stops generating and applying the attenuation map (not illustrated) and transmits a response, e.g. an acknowledgement, to the receiver 520. It also stops to insert the Green Metadata SEI message in the bitstream.

Tables 2-7 illustrate syntaxes for the request messages for use with display adaptation signalling according to embodiments of the present principles.

In a first embodiment, the receiver can indicate its model of display and the energy reduction rate it expects when the attenuation map is applied by the transmitter on the original video. Thus, the transmitter creates the dedicated attenuation map for the requested energy reduction rate, applies it on the video content which it inserts in the bitstream and generates the Green Metadata SEI message. Each new request from the receiver can cancel any previous request and the transmitter can apply the new configuration. In case the requested energy reduction rate is set to 0, the transmitter stops applying the attenuation map to the video and the original video content is inserted in the bitstream without modification. The syntax for the request message is illustrated in Table 2:

**Table 2: display power reduction request syntax**

| | **Descriptor** |
|---|---|
| ami_display_model | u(4) |
| ami_energy_reduction_rate | u(8) |

In a second embodiment, the receiver can request display adaptation without providing any information (e.g. display model and energy reduction rate) In this case, the transmitter uses a default attenuation map and provides the corresponding information to the receiver.

In a third embodiment, illustrated in Table 3, the syntax is that of Table 2 with the addition of a cancel flag, which can be used to cancel the configuration of the previous request. To cancel display power reduction, the receiver sends a request with the flag set to active (e.g. set to 1). In this case, the other fields in the message can be ignored.

**Table 3: display power reduction request syntax**

| | **Descriptor** |
|---|---|
| ami_cancel_flag | u(1) |
| ami_display_model | u(4) |
| ami_energy_reduction_rate | u(8) |

A fourth embodiment, illustrated in Table 4, extends the syntax in Table 3 with a bit field, **ami_attenuation_use_idc_flags,** that allows the receiver to indicate the type of processing preferred by the receiver to be used to apply the attenuation map to the original video by the transmitter. For example, the attenuation map can be subtracted, added or multiplied to reduce the luminance values of the pixel.

**Table 4: display power reduction request syntax**

| | **Descriptor** |
|---|---|
| ami_cancel_flag | u(1) |
| ami_display_model | u(4) |
| ami_attenuation_use_idc_flags | u(8) |
| ami_energy_reduction_rate | u(8) |

A fifth embodiment, illustrated in Table 5, extends the syntax in Table 4 with a bit field, **ami_attenuation_comp_idc_flags,** that allows the receiver to indicate the component(s) of the original video for which it accepts application of an attenuation map. For example, the attenuation map includes two components, a first to be applied to the luma component of the original video and the second to the chroma components. In previous embodiments (1-4), the map is only applied on the luminance component.

**Table 5: display power reduction request syntax**

| | **Descriptor** |
|---|---|
| ami_cancel_flag | u(1) |
| ami_display_model | u(4) |
| ami_attenuation_use_idc_flags | u(8) |
| ami_attenuation_comp_idc_flags | u(3) |
| ami_energy_reduction_rate | u(8) |

A sixth embodiment, illustrated in Table 6, extends the syntax in Table 4 with a flag, **ami_attenuation_all_comp_idc_flag,** allows the receiver to indicate it accepts that the transmitter applies the attenuation map to the luminance only or to all the components (luminance and both chroma components) together.

**Table 6: display power reduction request syntax**

| | **Descriptor** |
|---|---|
| ami_cancel_flag | u(1) |
| ami_display_model | u(4) |
| ami_attenuation_use_idc_flags | u(8) |
| ami_attenuation_all_comp_idc_flag | u(1) |
| ami_energy_reduction_rate | u(8) |

A seventh embodiment, illustrated in Table 7, extends the syntax in Table 5 with two fields, **ami video_quality_reduction** and **ami_video_quality_metric. ami_video_quality_reduction** indicates a percentage value by which the receiver accepts to reduce the value of the selected quality metric **ami _video_quality_metric** in comparison with its nominal value. Thus, the transmitter can balance between the video quality and the energy reduction to produce the attenuation map it applies to the video content.

**Table 7: display power reduction request syntax**

| | **Descriptor** |
|---|---|
| ami_cancel_flag | u(1) |
| ami_display_model | u(4) |
| ami_attenuation_use_idc_flags | u(8) |
| ami_attenuation_comp_idc_flags | u(3) |
| ami_video_quality_metric | u(3) |
| ami_video_quality_reduction | u(8) |
| ami_energy_reduction_rate | u(8) |

Tables 8 and 9 illustrate syntaxes for the response messages for use with display adaptation signalling according to embodiments of the present principles.

In one embodiment, illustrated in Table 8, the response message includes an indication of the display energy reduction rate accepted by the transmitter.

**Table 8: display power reduction response syntax**

| | **Descriptor** |
|---|---|
| ami_energy_reduction_rate | u(8) |

In another embodiment, illustrated in Table 9, the response message includes the expected display energy reduction rate and the corresponding video quality reduction of the quality metric selected by the receiver after the transmitter applies the Attenuation Map to the Original video.

**Table 9: display power reduction response syntax**

| | **Descriptor** |
|---|---|
| ami_energy_reduction_rate | u(8) |
| ami_video_quality_reduction | u(8) |

In another embodiment, illustrated in Table 10, the response message includes the expected display energy reduction rate, the quality metric selected by the receiver, and the corresponding video quality reduction of the quality metric after the transmitter applies the Attenuation Map to the Original video.

**Table 10: display power reduction response syntax**

| | **Descriptor** |
|---|---|
| ami_energy_reduction_rate | u(8) |
| ami_video_quality_metric | u(8) |
| ami_video_quality_reduction | u(8) |

In embodiments, the message is sent to the receiver to acknowledge the display adaptation request but does not carry any further information such as map number and list of energy reduction rates and/or video qualities.

A detailed description of the syntax features of the requests will now follow.
**ami_cancel_flag** equal to 1 indicates that the receiver requests to cancel the transmission of the attenuated video content and the related information in the Green Metadata SEI message.
**ami_display_model** is a bit field mask that indicates the display models of the receiver on which the attenuated video content will be rendered.

| **Bit number** | **Display model** |
|---|---|
| 0 | Transmissive pixel |
| 1 | Emissive pixel |
| 2..3 | Reserved for future types |

**ami_attenuation_use_idc_flags** is a bit field that allows the receiver to indicate the processing that the transmitter may use to apply the attenuation map on the original video.

| **Bit number** | **Process to apply to associated primary picture decoded samples** |
|---|---|
| 0 | Addition |
| 1 | Subtraction |
| 2 | Multiplication |
| 4..15 | User defined |

**ami_attenuation_comp_idc_flags** is a bit field that allows the receiver to indicate the component(s) of the original video to which the transmitter may apply the attenuation map.

| **bit number** | **Mapping between components of the attenuation map and the original video components to which the attenuation map may be applied** |
|---|---|
| 0 | the luma component of the original video picture |
| 1 | the luma and chroma components of the original video picture |
| 2 | the three RGB components of the original video picture |
| 3 | first component to luma component and second component to the chroma components of the original video picture |
| 4 | three components respectively applied to the luma and the two chroma components of the associated original video picture |
| 5 | three components respectively applied to the RGB components of the original video picture, i.e. after YUV to RGB conversion |
| 6..7 | Future use |

**ami_video_quality_metric** indicates the quality metric to be considered by the transmitter when it performs balancing between the value of this metric and the energy reduction rate.

| **ami_video_quality_metric field value** | **Process to apply on associated primary picture decoded samples** |
|---|---|
| 0x00 | Peak signal-to-noise ratio (PSNR) |
| 0x01 | Structural similarity index measure (SSIM) |
| 0x02 | wPSNR |
| 0x03 | WS-PSNR |
| 0x04 | Video Multi-Method Assessment Fusion (VMAF) |
| 0x05..0x07 | Reserved for future metrics |

**ami_video_quality_reduction** indicates the percentage of reduction of the selected quality metric that is accepted when the attenuation map is applied to the primary picture.
**ami_energy_reduction_rate** indicates the energy reduction rate the receiver expects when the attenuation map is applied on the primary picture. An example unit for the **ami_energy_reduction_rate** is a percentage or a Watt value.

As already mentioned, having received a request from the receiver, in step S517 in Figure 5, the transmitter generates metadata and computes at least one attenuation map.

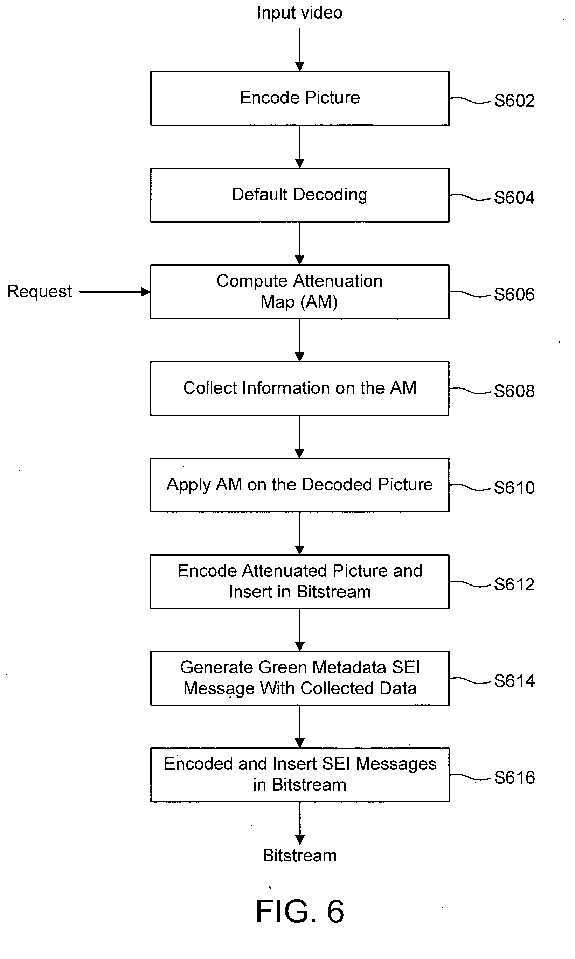

**Figure 6** illustrates a flow chart for a method of generation of green metadata at the transmitter according to an embodiment of the present principles. In the example of Figure 6, the transmitter generates Green Metadata and Alpha Map SEI messages and encapsulates a bitstream during the encoding of a given picture, i.e., the considered period corresponds to one picture.

In step S602, the transmitter encodes a picture of the received input video and obtains a sub-bitstream.

In step S604, the transmitter performs default decoding of the sub-bitstream.

Upon reception of a display power reduction request from a decoder (e.g., step S514 in Figure 5), in step S606, the transmitter computes an attenuation map based on the information received in the request.

In step S608, the transmitter collects data about the use of the attenuation map, the expected energy reduction and the corresponding expected quality. In case it is not possible to match requested values exactly, it is preferred that the data matches the receiver's request as much as possible, e.g., that it is the closest to the ones requested by the receiver.

In step S610, the transmitter applies the attenuation map to the picture in respect to the parameters provided by the receiver in the Display Power Reduction Request message. In step S612, the transmitter encodes the resulting picture, and inserts the encoded picture in the bitstream.

In step S612, the transmitter inserts the collected data in a Green Metadata SEI message.

In step S616, the transmitter encodes the SEI message and inserts the encoded SEI message in the bitstream that can then be output.

It is noted that some of the steps can be performed in a different order, e.g. steps S614 and S616 can be performed before steps S610 and S612.

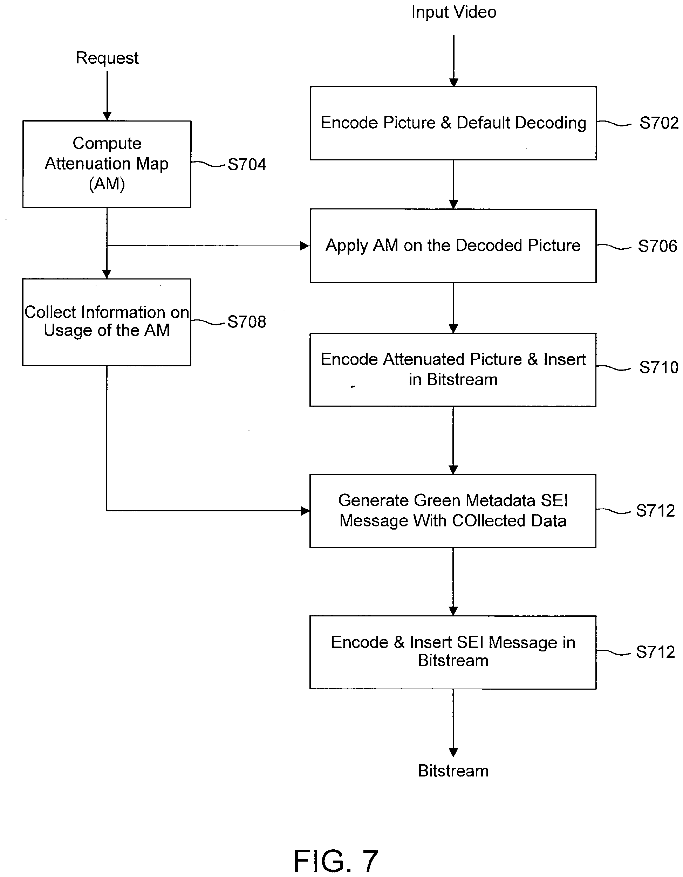

**Figure 7** illustrates a flow chart for a method of generation of green metadata at the transmitter according to a further embodiment of the present principles. In this embodiment, the computation of the attenuation map based on the information transmitted by the receiver in the Display Power Reduction Request message and the collection of the associated metadata is performed outside of the encoder, i.e. on an external device. This data can be provided to the encoder together with the input video.

In step S702, the transmitter encodes a picture of the received input video and obtains a sub-bitstream on which it performs default decoding.

Upon reception of a display power reduction request from a receiver (e.g., step S514 in Figure 5), in step S704, the external device computes an attenuation map based on the information received in the request. The attenuation map is provided to the transmitter.

In step S706, the transmitter applies the attenuation map to the picture.

In step S708, the external device collects data about the use of the attenuation map, the expected energy reduction and the corresponding expected quality. The data is provided to the transmitter.

In step S710, the transmitter encodes the attenuated picture, and inserts the encoded picture in the bitstream.

In step S712, the transmitter generates a Green Metadata SEI message including data collected by the external device.

In step S714, the transmitter encodes the SEI message and inserts the encoded SEI message in the bitstream that can then be output.

Again, some of the steps can be performed in a different order, e.g. step S708 can be performed before step S706.

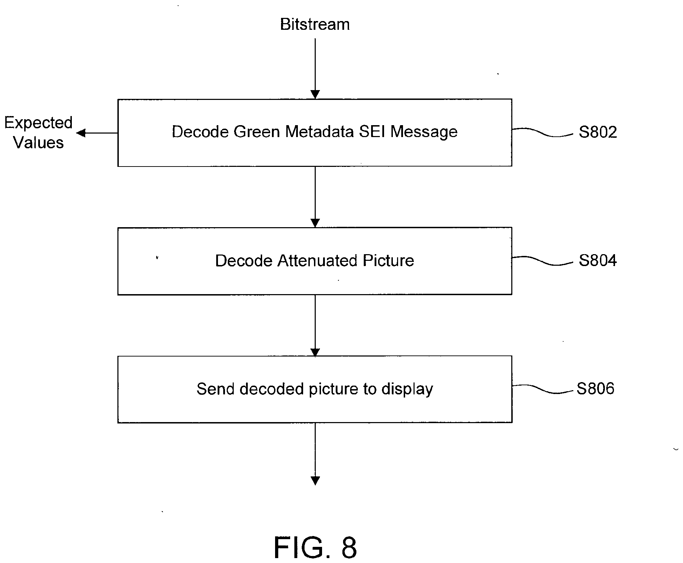

**Figure 8** is a flow chart illustrating a method for decoding an attenuated video according to an embodiment of the present principles. In the figure, it is assumed that the receiver (e.g. receiver 402 in Figure 4) has sent a display power reduction request to the transmitter as previously explained.

In step S802, the receiver retrieves SEI messages from a received bitstream for an attenuated picture or group of pictures. The expected Display Power Reduction Rate and the Metric Video Quality Reduction is retrieved, compared to those requested, and provided to the power optimization module.

In step S804, the receiver decodes the attenuated picture(s) from the bitstream to obtain a decoded picture. The decoding is performed as the decoding of a non-attenuated picture. No additional processing is required by the decoder to reduce the display power energy consumption.

In step S806, the resulting decoded is provided to the display.

It is noted that the present principles can provide a solution that enables a receiver to request an attenuated picture from the transmitter to reduce the energy consumption of its display in a more controllable and pixel-wise manner. The reduction can be controlled by the receiver, according to its profile and the end user's choice or the category of the video service. The solution can further enable the receiver to indicate to the transmitter how to generate the attenuation map and how to apply it on the components of the original video.

At least one example of an embodiment can involve a device as described herein, wherein the device comprises one of a television, a television signal receiver, a set-top box, a gateway device, a mobile device, a cell phone, a tablet, a computer, a laptop, or other electronic device.

In general, another example of an embodiment can involve a bitstream or signal formatted to include syntax elements and picture information, wherein the syntax elements are produced, and the picture information is encoded by processing based on any one or more of the examples of embodiments of methods in accordance with the present disclosure.

In general, one or more other examples of embodiments can also provide a computer readable storage medium, e.g., a non-volatile computer readable storage medium, having stored thereon instructions for encoding or decoding picture information such as video data according to the methods or the apparatus described herein. One or more embodiments can also provide a computer readable storage medium having stored thereon a bitstream generated according to methods or apparatus described herein. One or more embodiments can also provide methods and apparatus for transmitting or receiving a bitstream or signal generated according to methods or apparatus described herein.

Many of the examples of embodiments described herein are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the embodiments, features, etc. can be combined and interchanged with others described in earlier filings as well.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

In general, the examples of embodiments, implementations, features, etc., described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. One or more examples of methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. Also, use of the term "processor" herein is intended to broadly encompass various configurations of one processor or more than one processor.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Various embodiments are described herein. Features of these embodiments can be provided alone or in any combination, across various claim categories and types.

### Annex A: Syntax and semantics of green metadata SEI message carried in VVC NAL units

The annex describes the payload syntax and semantics if **payloadType** 56 appears in a VVC NAL unit with **nal_unit_type** set to PREFIX_SEI_NUT in the current version of the ISO/IEC 23001-11 specification without considering Display Power Reduction request mechanism by the receiver and the proposed version of the present principles.

### Annex A1: Current syntax defined in the ISO/IEC 23001-11 specification

| green_metadata( payload_size ) { | Descriptor |
|---|---|
| **green** _ **metadata type** | u(8) |
| switch ( green_metadata_type ) { | |
| case 0: | |
| **period_type** | u(4) |
| **granularity_type** | u(3) |
| **extended_representation_flag** | u(1) |
| if ( period type = = 2 ) { | |
| **num**_**seconds** | u(16) |
| } | |
| else if ( period_type = = 3 ) { | |
| **num_pictures** | u(16) |
| } | |
| if ( granularity_type = = 0 ) { | |
| **portion_non_zero_blocks_area** | u(8) |
| **portion_non_zero_transform_coefficients_area** | u(8) |
| **portion_intra_predicted_blocks_area** | u(8) |
| **portion_deblocking_instances** | u(8) |
| **portion_alf_instances** | u(8) |
| if ( extended_representation_flag ) { | |
| if ( portion_non_zero_blocks_area != 0 ) { | |
| **portion_non_zero_4_8_16_blocks_area** | u(8) |
| **portion_non_zero_32_64_128_blocks_area** | u(8) |
| **portion_non_zero_256_512_1024_blocks_area** | u(8) |
| **portion_non_zero_2048_4096_blocks_area** | u(8) |
| } | |
| if ( portion_intra_predicted_blocks_area < 255 ) { | |
| **portion_bi_and_gpm_predicted_blocks**_**area** | u(8) |
| **portion_bdof_blocks_area** | u(8) |
| } | |
| **portion_sao_instances** | u(8) |
| } | |
| } | |
| else if( granularity_type <= 3 ) { | |
| **max**_**num**_**segments_minus1** | u(16) |
| for ( t= 0; t<= max_num_segments_minus 1; t++ ) { | |
| **segment_address [ t ]** | u(16) |
| **portion_non_zero_blocks_area[ t ]** | u(8) |
| **portion_non_zero_transform_coefficients_area[ t ]** | u(8) |
| **portion_intra_predicted_blocks_area[ t ]** | u(8) |
| **portion_deblocking_instances [ t ]** | u(8) |
| **portion_alf_filtered_blocks[ t ]** | u(8) |
| if ( extended_representation_flag ) { | |
| if ( portion_non_zero_blocks_area[ t ] != 0 ) { | |
| **portion_non_zero_4_8_16_blocks_area[ t ]** | u(8) |
| **portion_non_zero_32_64_128_blocks_area[ t ]** | u(8) |
| **portion_non_zero_256_512_1024_blocks_area[ t ]** | u(8) |
| **portion_non_zero_2048_4096_blocks_area[ t ]** | u(8) |
| } | |
| if ( portion_intra_predicted_blocks_area[ t ] < 255 ) { | |
| **portion_bi_predicted_blocks_area[ t** ] | u(8) |
| **portion_bdof_block_area[ t ]** | u(8) |
| } | |
| **portion_sao_filtered_blocks[ t ]** | u(8) |
| } | |
| } | |
| } | |
| break; | |
| case 1: | |
| **xsd_subpic number minus1** | u(16) |
| for (i=0; i<= xsd_subpic_number_minus1; i++ ) { | |
| **xsd_subpic_idc[ i ]_** | u(16) |
| **xsd_metric_number_minus1[ i ]** | u(8) |
| for (j=0; j<= xsd metric number minus 1 [ i ]; j++ ) { | |
| **xsd_metric_type[ i ][ j ]** | u(8) |
| **xsd_metric_value[ i ][ j ]** | u(16) |
| } | |
| } | |
| break; | |
| default: | |
| } | |
| } | |

### Annex A2: The proposed syntax with no display power reduction request by the receiver

**green_metadata_type** specifies the type of metadata that is present in the SEI message. If **green_metadata_type** is 0, then complexity metrics are present. Otherwise, if **green_metadata_type** is 1, then metadata enabling quality recovery after low-power encoding is present. Other values of **green_metadata_type** are reserved for future use by ISO/IEC.

| green_metadata( payload_size ) { | **Descriptor** |
|---|---|
| **green_metadata_type** | u(8) |
| switch ( green_metadata_type ) { | |
| case 0: | |
| **period_type** | u(4) |
| **granularity_type** | u(3) |
| **extended_representation_flag** | u(1) |
| if ( period_type = = 2 ) { | |
| **num_seconds** | u(16) |
| } | |
| else if ( period_type = = 3 ) { | |
| **num_pictures** | u(16) |
| } | |
| if ( granularity type = = 0 ) { | |
| **portion_non_zero_blocks_area** | u(8) |
| **portion_non_zero_transform_coefficients_area** | u(8) |
| **portion_intra_predicted_blocks_area** | u(8) |
| **portion_deblocking_instances** | u(8) |
| **portion_alf_instances** | u(8) |
| if ( extended_representation_flag ) { | |
| if ( portion_non_zero_blocks_area != 0 ) { | |
| **portion_non_zero_4_8_16_blocks_area** | u(8) |
| **portion_non_zero_32_64_128_blocks_area** | u(8) |
| **portion_non_zero_256_512_1024_blocks_area** | u(8) |
| **portion_non_zero_2048_4096_blocks_area** | u(8) |
| } | |
| if ( portion_intra_predicted_blocks_area < 255 ) { | |
| **portion_bi_and_gpm_predicted_blocks_area** | u(8) |
| **portion_bdof_blocks_area** | u(8) |
| } | |
| **portion**_**sao_instances** | u(8) |
| } | |
| } | |
| else if( granularity_type <= 3 ) { | |
| **max_num_segments_minus1** | u(16) |
| for ( t= 0; t<= max_num_segments_minus1; t++ ) { | |
| **segment_address[ t ]** | u(16) |
| **portion_non_zero_blocks_area[ t ]** | u(8) |
| **portion_non_zero_transform_coefficients_area[** t ] | u(8) |
| **portion_intra_predicted_blocks_area[ t ]** | u(8) |
| **portion_deblocking_instances[ t ]** | u(8) |
| **portion_alf_filtered_blocks[ t ]** | u(8) |
| if ( extended_representation_flag ) { | |
| if ( portion_non_zero_blocks_area[ t ] != 0 ) { | |
| **portion_non_zero_4_8_16_blocks_area[ t ]** | u(8) |
| **portion_non_zero_32_64_128_blocks_area[ t ]** | u(8) |
| **portion_non-zero_256_512_1024_blocks_area[ t ]** | u(8) |
| **portion_non_zero_2048_4096_blocks_area[ t ]** | u(8) |
| } | |
| if ( portion_intra_predicted_blocks_area[ t ] < 255 ) { | |
| **portion_bi_predicted_blocks_area[ t ]** | u(8) |
| **portion_bdof_block_area[ t ]** | u(8) |
| } | |
| **portion_sao_filtered_blocks[ t ]** | u(8) |
| } | |
| } | |
| } | |
| break; | |
| case 1: | |
| **xsd_subpic_number_minus1** | u(16) |
| for (i=0; i<= xsd_subpic_number_minus1; i++ ) { | |
| **xsd_subpic_idc[ i ]_** | u(16) |
| **xsd_metric_number_minus1[ i ]** | u(8) |
| for ( j=0; j<= xsd_metric_number_minus1[ i ]; j++ ) { | |
| **xsd_metric_type[ i ][ j ]** | u(8) |
| **xsd_metric_value[ i ][ j ]** | u(16) |
| } | |
| } | |
| break; | |
| case 2: | |
| **ami_cancel_flag** | u(1) |
| if ( !ami_cancel_flag) { | |
| **ami_display_model** | u(4) |
| **ami_global_flag** | u(1) |
| **ami_map_approximation_model** | u(4) |
| **ami_box_xstart** | u(8) |
| **ami_box_ystart** | u(8) |
| a**mi_box_width** | u(8) |
| **ami_box_height** | u(8) |
| **ami_map_number** | u(4) |
| for (i=0;i<ami_map_number;i++ ) { | |
| **ami_layer_id[ i ]** | u(8) |
| **ami_ols_number[ i ]** | u(4) |
| **for (j=0;j<ami_ols_number[i];j++){** | |
| **ami_ols_id[ i ][ j ]** | u(8) |
| } | |
| **ami_comp_number[ i ]** | u(4) |
| **for ( j=0;j<ami_com_number[ i ];j++){** | |
| **ami_comp_idc[ i ]\[ j ]** | u(8) |
| } | |
| **ami_energy_reduction_rate[ i ]** | u(8) |
| **ami_video_quality[ i ]** | u(8) |
| **ami_max_value[ i ]** | u(16) |
| if ( !ami_global_flag ) or (i ==0 ) { | |
| **ami_attenuation_use_idc[ i ]** | u(4) |
| **ami_attenuation_comp_idc[ i ]** | u(4) |
| **ami_preprocessing_flag[ i ]** | u(1) |
| if( ami_preprocessing_flag[ i ] ){ | |
| **ami_preprocessing_type_idc[ i ]** | u(2) |
| } | |
| **ami_preprocessing_scale[ i ]** | u(8) |
| **ami_backlignt_scaling_idc[i]** | u(4) |
| } | |
| } | |
| } | |
| break; | |
| default: | |
| } | |
| } | |

### Annex A3: The proposed syntax with display power reduction request by the receiver for an attenuated video

| | |
|---|---|
| green_metadata( payload_size) { | **Descriptor** |
| **green_metadata_type** | u(8) |
| switch ( green_metadata_type ) { | |
| case 0: | |
| **period_type** | u(4) |
| **granularity_type** | u(3) |
| **extended_representation_flag** | u(1) |
| if ( period_type = = 2 ) { | |
| **num**_**seconds** | u(16) |
| } | |
| else if ( period_type = = 3 ) { | |
| **num_pictures** | u(16) |
| } | |
| if ( granularity_type = = 0 ) { | |
| **portion_non_zero_blocks_area** | u(8) |
| **portion_non_zero_transform_coefficients_area** | u(8) |
| **portion_intra_predicted_blocks_area** | u(8) |
| **portion_deblocking_instances** | u(8) |
| **portion_alf_instances** | u(8) |
| if ( extended_representation_flag ) { | |
| if ( portion_non_zero_blocks_area != 0 ) { | |
| **portion_non_zero_4_8_16_blocks_area** | u(8) |
| **portion_non_zero_32_64_128_blocks_area** | u(8) |
| **portion_non_zero_256_512_1024_blocks_area** | u(8) |
| **portion_non_zero_2048_4096_blocks_area** | u(8) |
| **}** | |
| if ( portion_intra_predicted_blocks_area < 255 ) { | |
| **portion_bi_and_gpm_predicted_blocks__area** | u(8) |
| **portion_bdof_blocks_area** | u(8) |
| } | |
| **portion_sao_instances** | u(8) |
| } | |
| } | |
| else if( granularity_type <= 3 ) { | |
| **max_num_segments_minus1** | u(16) |
| for ( t= 0; t<= max_num_segments_minus 1; t++ ) { | |
| **segment_address[ t ]** | u(16) |
| **portion_non_zero_blocks_area[ t ]** | u(8) |
| **portion_non_zero_transform_coefficients_area[ t ]** | u(8) |
| **portion_intra_predicted_blocks_area[ t ]** | u(8) |
| **portion_deblocking_instances[ t ]** | u(8) |
| p**ortion_alf_filtered_blocks[ t ]** | u(8) |
| if ( extended representation_flag ) { | |
| if ( portion_non_zero_blocks area[ t ] != 0 ) { | |
| **portion_non_zero_4_8_16_blocks_area [ t ]** | u(8) |
| **portion_non_zero_32_64_128_blocks_area[ t ]** | u(8) |
| **portion_non_zero_256_512_1024_blocks_area[ t ]** | u(8) |
| **portion_non_zero_2048_4096_blocks_area [ t ]** | u(8) |
| } | |
| if ( portion_intra_predicted_blocks_area[ t ] < 255 ) { | |
| **portion_bi_predicted_blocks_area[ t ]** | u(8) |
| **portion_bdof_block_area[ t ]** | u(8) |
| } | |
| **portion_sao_filtered_blocks[ t ]** | u(8) |
| } | |
| } | |
| } | |
| break; | |
| case 1: | |
| **xsd_subpic_number_minus1** | u(16) |
| for ( i=0; i<= xsd_subpic_number_minus1; i++ ) { | |
| **xsd_subpic_idc[ i ]_** | u(16) |
| **xsd_metric_number_minus1[ i ]** | u(8) |
| for (j=0; j<= xsd_metric_number_minus1[ i ]; j++ ) { | |
| **xsd_metric_type[ i ][ j ]** | u(8) |
| **xsd_metric_value[ i ][ j ]** | u(16) |
| } | |
| } | |
| break; | |
| case 2: | |
| ami_flags | u(8) |
| if ( ami_flags && 0x01 != 0x01 ) { | |
| ami_display_model | u(4) |
| if ( ami_flags && 0x04 == 0x04 ) { | |
| ami_map_approximation_model | u(4) |
| } | |
| ami_map_number | u(3) |
| for ( i=0;i<ami_map_number;i++ ) { | |
| ami_layer_id[ i ] | u(8) |
| ami_ols_number[ i ] | u(4) |
| for (j=0;j<ami_ols_number[ i ];j++){ | |
| ami_ols_id[ i ][ j ] | u(8) |
| } | |
| ami_energy_reduction_rate[ i ] | u(5) |
| ami_max_value[ i ] | u(8) |
| if ( ami_flags && 0x02 != 0x02 ) or (i = 0 ) { | |
| ami_attenuation_use_idc[ i ] | u(4) |
| ami_attenuation_comp_idc[ i ] | u(4) |
| if ( ami_flags && 0x08 == 0x08 ){ | |
| ami_preprocessing_flag[ i ] | u(1) |
| if( ami_preprocessing_flag[ i ] ){ | |
| ami_preprocessing_type_idc[ i ] | u(2) |
| } | |
| ami_preprocessing_scale_idc[ i ] | u(8) |
| } | |
| if ( ami_flags && 0x10 == 0x10 ){ | |
| ami_backlight_scaling_idc[ i ] | u(4) |
| } | |
| } | |
| } | |
| **If(ami_map_number == 0)){** | |
| ami_energy_reduction_rate | u(5) |
| **if( ami_flags && 0x20== 0x20 ){** | |
| **ami_video_quality_metric** | u(3) |
| **ami video_quality_reduction** | u(8) |
| } | |
| } | |
| } | |
| break; | |
| default: | |
| } | |
| } | |

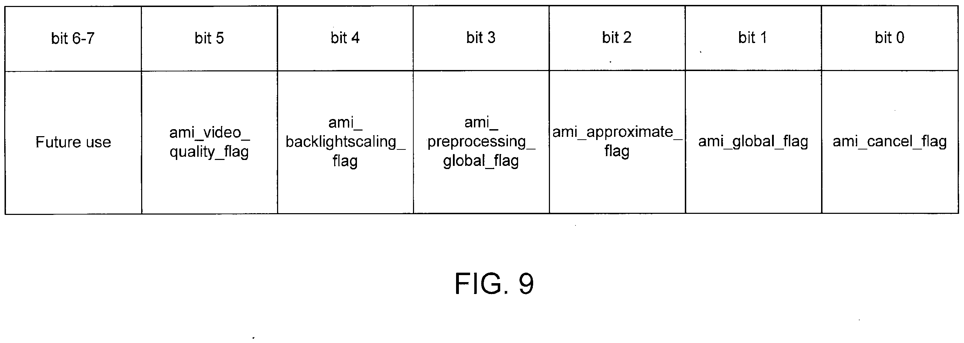

Compared to the proposed syntax described in the Annex A2, the **ami_flags** bit field is preferred to reduce the size of the message when some parameters are not present in the message. **ami_flags** is illustrated in FIG. 9 and further described below.
bit 0: **ami_cancel_flag** indicates that the SEI message cancels the persistence of any previous Attenuated Video Information SEI message in output order.
bit 1-4 (ami_**global_flag, ami_approximate_flag, ami_preprocessing_global_flag** and **ami**_**backlightscaling_flag):** set to 0.
bit 5: **ami_video_quality_flag** indicates whether the Video Quality information is present in the message.
bits 6 and 7 are reserved for future use.

In addition, **ami_map_number** is set to 0.

## Claims

1. A method performed by a video receiver device and comprising:
sending, to a video transmitter, information indicative of a request for video content adapted for energy-reduced rendering;
receiving, from the video transmitter, the video content; and
rendering the video content.

2. The method of claim 1, further comprising:
receiving, from the video transmitter, metadata indicative of at least one of an expected energy reduction rate and a measure of reduced video quality for a corresponding selected metric.

3. The method of claim 1, wherein the information comprises at least one of a type of display on which the video receiver device renders the video content, accepted processing for the video transmitter to apply an attenuation map to obtain the video content for energy-reduced rendering, a requested energy reduction rate, an indication to cancel adaptation of the video content for energy-reduced rendering, an indicator of at least one video component, luminance and chroma, to be affected by adaptation for energy-reduced rendering, an indicator whether the adaptation may be applied to only luminance or to all the video components, and an indication of accepted quality reduction of rendered video.

4. The method of claim 3, wherein the type of display comprises one of transmissive pixel display and emissive pixel display.

5. A video receiver device comprising:
a transmitter configured to send, to a video transmitter, information indicative of a request for video content adapted for energy-reduced rendering;
a receiver configured to receive, from the video transmitter, the video content; and
a processor configured to render the video content.

6. The video receiver device of claim 5, wherein the receiver is further configured to:
receive, from the video transmitter, first video content;
wherein the video content is adapted for a different level of energy-reduced rendering than the first video content.

7. The video receiver device of claim 6, wherein transmitter is further configured to send the information upon determination that a battery of the video receiver device is below a given level.

8. The video receiver device of claim 5, wherein transmitter is further configured to:
send, to the video transmitter, further information, indicative of a request for the video transmitter to cancel adaptation of the video content for energy-reduced rendering.

9. The video receiver device of claim 5, wherein the receiver is further configured to:
receive, from the video transmitter, metadata indicative of an expected energy reduction rate and a value of video quality reduction for a corresponding selected metric.

10. A method performed by a video transmitter and comprising:
in response to a request, from a video receiver, for video content adapted for energy-reduced rendering, the request comprising energy-reduction parameters, generating a pixel-wise attenuation map to be applied to the video content; and
generating metadata indicative of at least one of an achieved energy reduction rate, and a value of video quality reduction for a corresponding selected metric.

11. The method of claim 10, further comprising:
applying the attenuation map pixel-wise to video content to obtain the video content adapted for energy-reduced rendering; and
transmitting the video content adapted for energy-reduced rendering to the video receiver.

12. A video transmitter comprising a processor configured to:
in response to a request, from a video receiver, for video content adapted for energy-reduced rendering, the request comprising energy-reduction parameters, generate a pixel-wise attenuation map to be applied to the video content; and
generate metadata indicative of at least one of an achieved energy reduction rate, and a value of video quality reduction for a corresponding selected metric.

13. The video transmitter of claim 12, wherein the processor is further configured to:
apply the attenuation map pixel-wise to video content to obtain the video content adapted for energy-reduced rendering; and
transmit the video content adapted for energy-reduced rendering to the video receiver.

14. A non-transitory computer readable medium storing executable program instructions to cause a computer executing the instructions to perform a method according to any of claims 1 to 4 and 10 to 11.
